# EUROPÄISCHE PATENTSCHRIFT

(11) **EP 0 958 704 B1**
(45) Veröffentlichungstag und Bekanntmachung des Hinweises auf die Patenterteilung: **26.10.2005**
(21) Anmeldenummer: 98907882.9
(22) Anmeldetag: 02.02.1998
(51) Int. Cl.: H04Q 7/22

(54) **VERFAHREN UND ANORDNUNG ZUM ZUSTELLEN EINER ALS ALPHANUMERISCHE KURZNACHRICHT EINES KURZNACHRICHTENDIENSTES ABGESANDTEN NACHRICHT**
METHOD AND DEVICE FOR DELIVERING A MESSAGE SENT BY A MESSAGE SERVICE IN THE FORM OF AN ALPHANUMERICAL MESSAGE
PROCEDE ET DISPOSITIF POUR DELIVRER UN MESSAGE ENVOYE PAR UN SERVICE DE MESSAGERIE SOUS LA FORME D'UN MESSAGE ALPHANUMERIQUE

(30) Priorität: 05.02.1997 DE 19704342
(43) Veröffentlichungstag der Anmeldung: 24.11.1999
(73) Patentinhaber: SIEMENS AKTIENGESELLSCHAFT, 80333 München (DE)
(72) Erfinder: STELZER, Manfred, D-82152 Krailling (DE)
(86) Internationale Anmeldenummer: PCT/DE1998/000291
(87) Internationale Veröffentlichungsnummer: WO 1998/035513

(56) Entgegenhaltungen:
- WO-A-92/14329
- WO-A-97/20442
- US-A- 5 255 183
- POEYHOENEN P: "GSM PLMN MAKES A MOBILE OFFICE VIABLE" WORLD TELECOMMUNICATION FORUM TECHNICAL SYMPOSIUM. INTEGRATION INTEROPERATION AND INTERCONNECTION: THE WAY TO GLOBAL SERVICES, Bd. 2, 10. Oktober 1991, Seiten 375-378, XP000612365
- SMALE S: "THE MOBILE PHONE AS AN E-MAIL 'CLIENT-OF-CHOICE'" INTERNATIONAL WORKSHOP ON MOBILE MULTI-MEDIA COMMUNICATIONS,11. April 1995, Seiten 1-6, XP000671022
- NEUER E I: "PERSONAL COMMUNICATION IN TRADITIONAL CELLULAR NETWORKS" PROCEEDINGS OF THE SPIE, Bd. 2602, 1996, Seiten 184-194, XP000197931
- HOSHI T ET AL: "A MOBILE PEN-BASED COMPUTING SYSTEM FOR CELLULAR TELEPHONE NETWORKS" PROCEEDINGS OF THE GLOBAL TELECOMMUNICATIONS CONFERENCE (GLOBECOM), HOUSTON, NOV. 29 - DEC. 2, 1993, Bd. 1, 29. November 1993, Seiten 380-384, XP000428085 INSTITUTE OF ELECTRICAL AND ELECTRONICS ENGINEERS

## Beschreibung

Die vorliegende Erfindung betrifft ein Verfahren und eine Anordnung zum Zustellen einer als alphanumerische Kurznachricht eines Kurznachrichtendienstes abgesandten Nachricht an ein Wiedergabegerät.

Ein solches Verfahren ist innerhalb eines Mobilfunknetzes gemäß dem GSM-Standard (Global System for Mobile Communications), einem digitalen zellularen Kommunikationssystem, bekannt. In diesem bekannten Kommunikationssystem wird eine alphanumerische Kurznachricht (Short Message SM) von einem Kurznachrichtendienst-Zentrum (Short Message Service Center SMS) gemäß einem Kurznachrichten-Übertragungsprotokoll (Short Message Transfer Protocol SM-TP) zu einem tragbaren Endgerät (Portable Part PP) übertragen.

Hierzu gibt das Kurznachrichtendienst-Zentrum die Nachricht über ein SMS-MSC-Gateway, in dem das Protokoll der Kurznachrichtvermittlungsschicht (Short Message Routing Layer SM-RL) in ein Format eines mobilen Anwendungsprotokolls (Mobile Application Part) MAP/H umgesetzt wird, an ein Mobildienstvermittlungszentrum (Mobile services Switching Center MSC) ab. Das Mobildienstvermittlungszentrum MSC stellt die Nachricht.dann im MAP-Format an das tragbare Endgerät PP in einem GSM-Übertragungsmodus zu, wobei die Meldungen der Kurznachricht-Transportschicht SM-TL und der Kurznachricht-Anwendungsschicht transparent zum Endgerät gelangen.

Dieses Verfahren zum Zustellen einer Kurznachricht hat sich als geeignet erwiesen, wenn ein Teilnehmer innerhalb absehbarer Zeit bzw. prinzipiell über ein tragbares Endgerät des GSM Netzes erreichbar ist. Andernfalls ist eine Kurznachricht nicht oder nicht in einem sinnvollen Zeitraum zustellbar.

Aus der WO 92/14329 und aus dem Artikel von P. Pöyhönen "GSM PLMN makes a mobile office viable", World Telecommunication Forum Technical Symposium. Integration Interoperation and Interconnection: The way to global services, Bd. 2, 10. Okt. 1991, S. 375-378, XP000612365, ist bekannt, daß eine GSM-Standard-gemäße Kurznachricht (SMS) eines sendenden Teilnehmers in einem Short Message Service Center in ein Fax- bzw. E-Mail-Format gewandelt und zu einem adressierten Empfänger auch außerhalb des GSM-Mobilfunksystems übertragen werden kann.

Aufgabe der vorliegenden Erfindung ist es, das vorstehend beschriebene Verfahren zum Zustellen einer alphanumerischen Kurznachricht an ein Wiedergabegerät dahingehend zu verbessern, daß die Zustellbarkeit der Kurznachricht erhöht wird. Außerdem sollen für ein solches Verfahren geeignete Anordnungen angegeben werden.

Bei einem erfindungsgemäßen Verfahren wird eine von einem Teilnehmer als eine alphanumerische Kurznachricht abgesandte Nachricht an ein Wiedergabegerät eines weiteren Kommunikationsdienstes übermittelt. Die alphanumerische Kurznachricht wird von einem Kurznachrichtensteuermodul an eine Umsetzeinrichtung übermittelt, durch die Umsetzeinrichtung in eine Nachricht des weiteren Kommunikationsdienstes umgesetzt und diese Nachricht an das Wiedergabegerät übermittelt. Kennzeichnend wird zur Nutzung des Dienstes eine Überprüfung einer Berechtigung anhand eines individuellen Teilnehmerprofils durchgeführt, und bei einer Berechtigung die Nachricht übermittelt.

In einer Ausgestaltung der Erfindung wird zum Zustellen einer als alphanumerische Kurznachricht eines Kurznachrichtendienstes abgesandten Nachricht an ein Fax-Wiedergabegerät die alphanumerische Kurznachricht von einem Kurznachrichtensteuermodul an eine Umsetzeinrichtung übermittelt und durch die Umsetzeinrichtung in eine Fax-Nachricht umgewandelt. Diese Nachricht wird an das Fax-Wiedergabegerät übermittelt.

Die Kurznachricht kann hierbei von einem Kurznachrichtensender als Kurznachricht beispielsweise an einem Mobilfunkendgerät oder bei einem Kurznachrichtdiensteanbieter über Bildschirmtext, mündlich oder per Modem eingegeben worden sein und wird von einem Kurznachrichtensteuermodul beispielsweise über einen Server zum Umsetzen der Kurznachricht in eine Faksimilenachricht oder über ein Servicecenter zum Umsetzen der Kurznachricht in eine Faksimilenachricht übertragen. Daraufhin wird die Faksimilenachricht an ein Faxgerät des Empfängers übermittelt.

Das Faxgerät kann hierbei an einem beliebigen öffentlichen Kommunikationsnetz, also sowohl an einem stationären als auch an einem mobilen Kommunikationsnetz als Endgerät angeschlossen sein. Die in das Faxformat umgewandelte Nachricht wird von dem Kurznachrichten/Fax-Server oder dem Kurznachrichten/Fax-Servicecenter an die vom Sender angegebene Zieladresse gesandt.

Eine Einrichtung zur Durchführung eines der beschriebenen Verfahren ist ein Server zum Umsetzen einer in einem Kurznachrichtprotokoll-Format von einem Kurznachrichtensteuermodul eines Kurznachricht-Servicezentrums empfangenen Kurznachricht in ein Faksimile-Format. Dieser enthält ein erstes Koppelmodul zum Empfangen der Kurznachricht vom Kurznachrichtensteuermodul, ein zweites Koppelmodul zum Ausgeben der Nachricht an ein adressiertes Faksimile-Wiedergabegerät über ein Kommunikationsnetz, ein Text/Fax-Umwandlermodul zum Umwandeln der im Kurznachrichtprotokoll-Format empfangenen Kurznachricht in ein zu einem Faksimilewiedergabegerät übertragbares und von diesem wiedergebbares Format, und ein Steuermodul, um automatisch das Umwandeln von im Kurznachrichtprotokoll-Format empfangenen Kurznachrichten in ein Faksimile-Format zu steuern sowie einen Verbindungsaufbau zwischen dem Server und dem Faksimilewiedergabegerät zu veranlassen.

Das Text/Fax-Umwandlermodul setzt das Kurznachricht-Übertragungsprotokoll SM-TP beispielsweise zum Weiterleiten über ein öffentliches Telefonvermittlungsnetz PSTN (Public Switched Telephone Network) in ein Fax-Protokoll gemäß dem Standard T5/T30 um. Die Kurznachricht wird hierbei in ein Fax-Bild umgesetzt, um dann mit Hilfe eines Modems unter Verwendung der genannten Fax-Protokolle T5/T30 an ein adressiertes Fax-Gerät weitergeleitet zu werden. Welcher Faksimile-Dienst verwendet wird, hängt hierbei von der vom adressierten Faxgerät nach dem Verbindungsaufbau signalisierten Kennung ab. Wird die Verbindung über ein ISDN-Netz aufgebaut, kann der Fax-Dienst Fax-Gruppe 2/3 gemäß die ITU-Q.760-Q.764 oder Fax-Gruppe 4 gemäß ITU-Gruppe 4 gemäß ITU-Q.930-Q.934 sein. Bei einer analogen Modem-Verbindung kommen die Protokolle der CCITT-Empfehlungen für analoge Datennetze der Reihe V.2x und V.3x zur Anwendung, beispielsweise V.34.

Eine Weiterbildung eines solchen Servers enthält außerdem ein FAX/Kurznachricht-Umwandlermodul zum Umwandeln von einer über die zweite Koppeleinrichtung empfangenen Fax-Nachricht in ein Kurznachrichtprotokoll-Format. Hierbei ist das Steuermodul außerdem zum automatischen steuern des Umwandelns von im Faksimile-Format empfangenen Nachrichten in ein Kurznachrichtprotokoll-Format vorgesehen, sowie um das Kurznachrichtensteuermodul des Kurznachricht-Servicezentrums zum Zustellen der Kurznachricht an ein adressiertes Endgerät zu veranlassen. Das Fax/Kurznachricht-Umwandlermodul verwendet eine Prozedur zum Umwandeln von Schriftzeichen in alphanumerische Zeichen, wie es unter der Bezeichnung OCR (Optical Character Recognition) bekannt ist. Die alphanumerischen Zeichen werden dann im Kurznachrichten-Format an einen Kurznachrichten-Empfänger weitergeleitet. Zum Einleiten eines Umsetzvorganges Fax/Kurznach-richt ruft ein Fax-Teilnehmer eine spezielle Server-Rufnummer an.

In einer anderen Ausgestaltungsform der Erfindung ist der andere Kommunikationsdienst ein Sprachdienst. Zum Zustellen einer als alphanumerische Kurznachricht eines Kurznachrichtendienstes abgesandten Nachricht an ein Tonwiedergabegerät wird die alphanumerische Kurznachricht von einem Kurznachrichtensteuermodul an eine Umsetzeinrichtung übermittelt und durch die Umsetzeinrichtung in eine Sprachnachricht umgewandelt. Diese Sprachnachricht wird dann nach einem Verbindungsaufbau an ein adressiertes Tonwiedergabegerät übertragen. Ein Tonwiedergabegerät ist hierbei beispielsweise ein Telefon oder ein Multimediaendgerät mit Tonwiedergabe. Für die Erfindung ist es ohne Belang, ob das adressierte Telefon ein drahtgebundenes Telefon, ein Schnurlostelefon oder ein Mobilfunktelefon ist.

Bei der letztgenannten Ausgestaltungsform der Erfindung wird eine von einem Sender abgesandte Kurznachricht beispielsweise über einen Kurznachrichten/Sprachserver oder ein Kurznachrichten/Sprachservicecenter, in dem die alphanumerische Kurznachricht in eine Sprachnachricht umgewandelt wird, an ein Telefongerät oder ein anderes Gerät mit Sprachausgabemöglichkeit gesandt und an diesem Gerät als Sprachnachricht ausgegeben. Auch hier kann das Sprach-Wiedergabegerät an einem beliebigen Kommunikationsnetz angeschlossen sein.

Die Umsetzeinrichtung im Kurznachrichten/Sprachserver bzw. Kurznachrichten/Sprachservicecenter wandelt hierbei die alphanumerischen Zeichen der Kurznachricht in Sprache um und sendet die Sprach-Kurznachricht an die vom Sender der alphanumerischen Kurznachricht eingegebene Zieladresse. In einer Weiterbildung der Erfindung kann hierbei der Teilnehmer der Zieladresse automatisch von dem Kurznachrichten/Sprachserver oder dem entsprechenden Servicecenter angerufen werden und gefragt werden, ob er die Nachricht empfangen will. Der gerufene Teilnehmer kann dann gegebenenfalls mittels Teilnehmerselbsteingabe oder durch Sprechen einer Antwort an ein Spracherkennungssystem des Servers die Nachricht entgegennehmen oder abweisen, die Nachricht bestätigen oder wiederholen lassen. Falls der gerufene Teilnehmer nicht erreichbar ist, kann in einer Weiterbildung der Erfindung in regelmäßigen Abständen ein Anrufversuch unternommen werden oder automatisch das Leistungsmerkmal Automatischer Rückruf eingeleitet werden.

In einer Weiterbildung der Erfindung hat der eine Kurznachricht sendende Teilnehmer die Möglichkeit, eine Landessprache für die Sprachausgabe der Kurznachricht beim gerufenen Teilnehmer festzulegen. Der Absender einer Kurznachricht kann gegebenenfalls aufgrund der Adresse des rufenden Teilnehmers (Calling Party Adress) von dem Kurznachrichten/Sprachserver ermittelt werden und daraufhin kann der Name des Absenders beim Anmelden der Kurznachricht oder beim Zustellen der Kurznachricht per Sprachausgabe angegeben werden.

Eine zur Durchführung der letztgenannten Ausgestaltung eines erfindungsgemäßen Verfahrens geeignete Umsetzeinrichtung ist durch einen Server zum Umsetzen einer in einem Kurznachrichtprotokoll-Format von einem Kurznachrichtensteuermodul eines Kurznachricht-Servicezentrums empfangenen Kurznachricht in eine Sprachnachricht realisiert. Ein solcher Server enthält ein erstes Koppelmodul zum Empfangen der Kurznachricht vom Kurznachrichtensteuermodul, ein zweites Koppelmodul zum Ausgeben der Sprachnachricht an ein adressiertes Tonwiedergabegerät über ein Kommunikationsnetz und ein Text/Sprach-Umwandlermodul mit Sprachsynthesemodul zum Umsetzen der Textnachrichtsignale in synthetisierte Sprachnachrichtsignale und somit zum Umwandeln der im Kurznachrichtprotokoll-Format empfangenen Kurznachricht in ein zu einem Tonwiedergabegerät übertragbares und von diesem wiedergebbares Format. Außerdem ist ein Steuermodul zum Steuern des automatischen Umwandelns von im Kurznachrichtprotokoll-Format empfangenen Kurznachrichten in Sprachnachricht im Server enthalten. Das Steuermodul veranlaßt darüber hinaus einen Verbindungsaufbau zwischen dem Server und dem Tonwiedergabegerät.

Das Text/Sprache-Umwandlermodul setzt hierbei die Nachrichteninhalte der Kurznachricht-Anwendungsschicht SM-AL mit Hilfe eines Sprachsynthesemoduls in Sprache um. Die Zieladresse, zu der ein Ruf aufgebaut werden soll, kann abhängig von der Ausgestaltung des Servers entweder im Dialog von dem die Kurznachricht eingebenden Teilnehmer eingegeben werden, oder von dem Steuermodul aus der Kurznachricht-Routingschicht SM-RL entnommen werden.

Eine vorteilhafte Weiterbildung eines solchen Servers enthält außerdem ein Sprachnachricht/Kurznachricht-Umwandlermodul zum Umwandeln von einer über die zweite Koppeleinrichtung empfangenen Sprachnachricht in ein Kurznachrichtprotokoll-Format. Bei einem derart weitergebildeten Server dient das Steuermodul außerdem dem Steuern des automatischen das Umwandelns von in einem Sprachformat empfangenen Nachrichten in ein Kurznachrichtprotokoll-Format, sowie, um das Kurznachrichtensteuermodul des Kurznachricht-Servicezentrums zum Zustellen der Kurznachricht an ein adressiertes Engerät zu veranlassen.

In einer weiteren Ausgestaltungsform der vorliegenden Erfindung ist der andere Kommunikationsdienst ein elektronischer Postdienst, wie z.B. X.400-Mail, Internet-Mail oder Compuserve. Zum Zustellen einer als alphanumerische Kurznachricht eines Kurznachrichtendienstes abgesandten Nachricht an einen elektronischen Postdienst wird die alphanumerische Kurznachricht von einem Kurznachrichtensteuermodul an eine Umsetzeinrichtung übermittelt und von dieser in eine Nachricht im Format des elektronischen Postdienstes umgesetzt. Diese Nachricht wird an ein adressiertes Empfängerpostfach des elektronischen Postdienstes übermittelt.

Eine alphanumerische Kurznachricht eines Kurznachrichtendienstes wird also von einem Kurznachrichtensteuermodul beispielsweise an einen Server oder ein Servicezentrum übermittelt und durch einen in diesem enthaltenen Umsetzer in eine elektronische Postnachricht eines vom Sender ausgewählten elektronischen Postdienstes umgesetzt, um dann mit der Adresse dem Empfängers zum entsprechenden Postdienst übermittelt zu werden. Die Zustellung der Postdienstnachricht an den Empfänger erfolgt dann in der für den entsprechenden Postdienst üblichen Weise.

Ein Server zum Umsetzen einer in einem Kurznachrichtprotokoll-Format von einem Kurznachrichtensteuermodul eines Kurznachricht-Servicezentrums empfangenen Kurznachricht in ein Format eines elektronischen Postdienstes enthält erfindungsgemäß ein erstes Koppelmodul zum Empfangen der Kurznachricht vom Kurznachrichtensteuermodul, ein zweites Koppelmodul zum Ausgeben der Nachricht an ein adressiertes Postfach eines elektronischen Postdienstes über ein Kommunikationsnetz und ein Kurznachricht/E-Mail-Umwandlermodul zum Umwandeln der im Kurznachrichtprotokoll-Format empfangenen Kurznachricht in ein zu einem Postfach eines elektronischen Postdienstes übertragbares und von diesem wiedergebbares Format. Außerdem enthält ein solcher Server ein Steuermodul, um automatisch das Umwandeln von im Kurznachrichtprotokoll-Format empfangenen Kurznachrichten in ein Format des elektronischen Postdienstes zu steuern sowie einen Verbindungsaufbau zwischen dem Server und dem adressierten Postfach des elektronischen Postdienstes zu veranlassen.

Das Kurznachricht/E-Mail-Umwandlermodul wandelt die Kurznachricht in eine elektronische Postdienstnachricht (E-Mail), indem es den Nachrichteninhalt der Kurznachricht in den Nachrichteninhalt der E-Mail kopiert, wobei die Adreßinformation der Kurznachricht in den Adreßteil der E-Mail geschrieben wird. Das heißt, daß die Protokollmeldungen der Kurznachrichtendienst-Anwendungsschicht, der Kurznachrichtendientstransportschicht und der Kurznachrichtendienst-Routingschicht SM-AL, SM-TL und SM-RL in das Anwendungsschichtprotokoll, zum Beispiel gemäß X.400, übertragen werden. Dadurch ist die Direktverbindung, beispielsweise in das Internet oder zu Compuserve möglich. Selbstverständlich ist aber auch ein Verbindungsaufbau über ein öffentliches Telefonvermittlungsnetz und einen Diensteanbieter möglich.

Eine günstige Weiterbildung eines solchen Servers enthält darüber hinaus ein E-Mail-/Kurznachricht-Umwandlermodul zum Umwandeln von einer über die zweite Koppeleinrichtung im Format eines elektronischen Postdienstes empfangenen Nachricht in ein Kurznachrichtprotokoll-Format. In diesem Falle ist das Steuermodul außerdem zum Steuern des automatischen das Umwandelns von in einem Format eines elektronischen Postdienstes empfangenen Nachrichten in ein Kurznachrichtprotokoll-Format vorgesehen und dazu, das Kurznachrichtensteuermodul des Kurznachricht-Servicezentrums zum Zustellen der Kurznachricht an ein adressiertes Engerät zu veranlassen.

Vorzugsweise wird im Letztgenannten Fall die Kurznachricht von der Umsetzeinrichtung an ein Kurznachrichtensteuermodul abgegeben und von diesem Kurznachrichtensteuermodul an das Wiedergabegerät des adressierten Teilnehmers übermittelt.

Das Umsetzen einer E-Mail-Nachricht in Kurznachrichten-Format erfolgt umgekehrt wie das Umsetzen einer im Kurznachrichten-Format vorliegenden Nachricht in eine E-Mail-Nachricht.

Eine weitere Ausgestaltung der vorliegenden Erfindung sieht das Zustellen einer als alphanumerische Kurznachricht eines Kurznachrichtendienstes abgesandten Nachricht an ein Telexwiedergabegerät vor. Hierzu wird die alphanumerische Kurznachricht von einem Kurznachrichtensteuermodul an eine Umsetzeinrichtung übermittelt und durch diese in eine Nachricht im Telexformat umgewandelt. Diese Nachricht wird dann an ein adressiertes Telexwiedergabegerät Übertragen.

Eine hierzu geeignete Anordnung besteht aus einem Server zum Umsetzen einer in einem Kurznachrichtprotokoll-Format von einem Kurznachrichtensteuermodul eines Kurznachricht-Servicezentrums empfangenen Kurznachricht in eine Telexnachricht. Ein solcher Server enthält ein erstes Koppelmodul zum Empfangen der Kurznachricht vom Kurznachrichtensteuermodul, ein zweites Koppelmodul zum Ausgeben der Telexnachricht an ein adressiertes Telexgerät über ein Kommunikationsnetz und ein Kurznachricht/Telex-Umwandlermodul zum Umwandeln der im Kurznachrichtprotokoll-Format empfangenen Kurznachricht in ein zu einem Telexgerät übertragbares und von diesem wiedergebbares Format. Außerdem enthält er ein Steuermodul, um automatisch das Umwandeln von im Kurznachrichtprotokoll-Format empfangenen Kurznachrichten in Telexformat zu steuern sowie einen Verbindungsaufbau zwischen dem Server und dem Telexgerät zu veranlassen.

Eine Weiterbildung eines solchen Servers enthält außerdem ein Telexnachricht/Kurznachricht-Umwandlermodul zum Umwandeln von einer über die zweite Koppeleinrichtung empfangenen Telexnachricht in ein Kurznachrichtprotokoll-Format. Das Steuermodul ist dann außerdem vorgesehen, um das automatische Umwandeln von in einem Telexformat empfangenen Nachrichten in ein Kurznachrichtprotokoll-Format zu steuern sowie das Kurznachrichtensteuermodul des Kurznachricht-Servicezentrums zum Zustellen der Kurznachricht an ein adressiertes Engerät zu veranlassen.

Eine weitere Ausgestaltung der vorliegenden Erfindung sieht das Zustellen einer als alphanumerische Kurznachricht eines Kurznachrichtendienstes abgesandten Nachricht an ein Telegrammwiedergabegerät vor. Hierzu wird die alphanumerische Kurznachricht von einem Kurznachrichtensteuermodul an eine Umsetzeinrichtung übermittelt und durch die Umsetzeinrichtung in ein Telegrammnachrichtenformat umgesetzt. Dann wird diese Nachricht an das adressierte Telegrammwiedergabegerät Übermittelt.

Eine hierzu geeignete Anordnung besteht aus einem Server zum Umsetzen einer in einem Kurznachrichtprotokoll-Format von einem Kurznachrichtensteuermodul eines Kurznachricht-Servicezentrums empfangenen Kurznachricht in eine Telegrammnachricht. Ein solcher Server enthält ein erstes Koppelmodul zum Empfangen der Kurznachricht vom Kurznachrichtensteuermodul, ein zweites Koppelmodul zum Ausgeben der Telegrammnachricht an ein adressiertes Telegrammgerät über ein Kommunikationsnetz und ein Kurznachricht/Telegramm-Umwandlermodul zum Umwandeln der im Kurznachrichtprotokoll-Format empfangenen Kurznachricht in ein zu einem Telegrammgerät übertragbares und von diesem wieder-gebbares Format. Darüber hinaus ist ein Steuermodul enthalten, um das automatische Umwandeln von im Kurznachrichtprotokoll-Format empfangenen Kurznachrichten in Telegrammnachricht zu steuern sowie einen Verbindungsaufbau zwischen dem Server und dem Telegrammgerät zu veranlassen.

Eine Weiterbildung eines solchen Servers enthält außerdem ein Telegrammnachricht/Kurznachricht-Umwandlermodul zum Umwandeln von einer über die zweite Koppeleinrichtung empfangenen Telegrammnachricht in ein Kurznachrichtprotokoll-Format. In diesem Falle ist das Steuermodul außerdem vorgesehen, um das automatische Umwandeln von in einem Telegrammformat empfangenen Nachrichten in ein Kurznachrichtprotokoll-Format zu steuern sowie um das Kurznachrichtensteuermodul des Kurznachricht-Ser-vicezentrums zum Zustellen der Kurznachricht an ein adressiertes Engerät zu veranlassen.

Formatumwandlung und Datennetzzugang erfolgen beim Umsetzen einer Kurznachricht in eine Telexnachricht oder eine Telegrammnachricht ähnlich wie oben in Zusammenhang mit dem elektronischen Postdienst beschrieben. Auch die Umwandlung in die andere Richtung erfolgt analog.

Vorteilhafte Ausgestaltungen erfindungsgemäßer Server enthalten, abhängig vom Bedarf der zuzustellenden Nachrichtenformate und der zu bedienenden Endgerätetypen mehrere der genannten Umwandlermodule. Ein besonders günstig ausgestalteter Server enthält ein Kurznachricht/FAX-Umwandlermodul, ein Text/Sprache-Umwandlermodul, ein Kurznachricht/E-Mail-Umwandlermodul, ein Kurznachricht/Telex-Umwandlermodul, ein Kurznachricht/Telegramm-Umwandlermodul, ein FAX/Kurznachricht-Umwandlermodul, ein Sprache/Kurznachricht-Umwandlermodul, ein E-Mail/Kurznachricht-Umwandlermodul, ein Telex/Kurznachricht-Umwandlermodul und ein Telegramm/Kurznachricht-Umwandlermodul der vorstehend beschriebenen Art.

Erfindungsgemäße Server können in bezug auf ein Kurznachrichtendienst-Zentrum SMS, ein Mobilvermittlungszentrum MSC und ein SMS-MSC-Gateway unterschiedlich angeordnet sein und auch unterschiedlich angeschlossen sein. Beispielsweise kann ein erfindungsgemäßer Server eine separate Einheit eines Kurznachrichtendienst-Zentrum oder ein Teil eines Kurznachrichtendienst-Zentrums sein. Ein erfindungsgemäßer Server kann aber auch Teil eines SMS-MSC-Gateway sein, Teil eines Mobilvermittlungszentrums MSC oder einer anderen Vermittlungseinrichtung.

Es ist auch möglich, daß Teile eines erfindungsgemäßen Servers, wie zum Beispiel das oder die Umwandlermodule dem Kurznachrichtendienst-Zentrum zugeordnet sind und andere Teile, wie zum Beispiel Modems oder Hardware-Sprachmodule sich in einer Vermittlungseinrichtung befinden. Ebenso können die Softwarekomponenten der Umwandlermodule und die Steuerung dem Kurznachrichtendienst-Zentrum zugeordnet sein, wohingegen die Hardwarekomponenten wie Modems, Sprachumsetzeinrichtungen und gegebenenfalls Netzübergänge dem SMS-MSC-Gateway zugeordnet sind.

Bei örtlich verteilten Servern sind vorzugsweise funktionale Einheiten an einer Stelle konzentriert und physikalische Einheiten sind ebenfalls an einer Stelle konzentriert, vorzugsweise in einem einzigen Gerät.

Unabhängig von der Anordnung eines erfindungsgemäßen Servers ist die Verbindung von dem Kurznachrichtendienst-Zentrum zum Server üblicherweise eine CCS7-Verbindung. Die Verbindung vom Server zu anderen Netzeinheiten kann auf verschiedene Weise realisiert sein.

Falls der Server mit einer Netzeinheit eine physikalische Einheit bildet, kann er mit dieser Netzeinheit über eine systeminterne systemspezifische Schnittstelle verbunden sein, beispielsweise auf der Grundlage sogenannter Primitivs.

Ist der Server als eigenständige Einheit an ein SMS-MSC-Gateway oder an ein Mobilvermittlungszentrum MSC angeschlossen, so kann dies beispielsweise eine Verbindung mit Nutzkanälen und CCS7-Kanälen sein, wie sie zwischen Vermittlungsstellen üblich ist. In diesem Fall ist der Server also wie eine Vermittlungsstelle, beispielsweise mit Hilfe des Protokolls TUP oder des Protokolls ISUP an die entsprechende Netzeinheit angeschlossen.

Der Server kann jedoch auch über eine Analog- oder Digitalverbindung wie ein Teilnehmer oder eine Nebenstellenanlage an ein Mobilvermittlungszentrum MSC oder ein SMS-MSC-Gateway angeschlossen sein. Zur Nachrichtenzustellung von Fax-Nachrichten, Sprach-Nachrichten, E-Mail-Nachrichten, Telex-Nachrichten oder Telegramm-Nachrichten kann ein erfindungsgemäßer Server über eine Teilnehmerleitung oder über eine Zwischenamtsleitung an ein entsprechendes Telefonnetz oder Datennetz angeschlossen sein.

Fax-Nachrichten oder Sprach-Nachrichten können von einem erfindungsgemäßen Server auch an das Mobilfunknetz abgegeben werden und dann, falls erforderlich, über Netzübergänge zwischen dem Mobilfunknetz und einem öffentlichen Telefonvermittlungsnetz in das öffentliche Telefonvermittlungsnetz eingespeist werden.

Sowohl das Aussenden einer Nachricht als auch das Empfangen einer Nachricht beim Durchführen eines erfindungsgemäßen Verfahrens können gegebenenfalls als teilnehmerindividuelles Leistungsmerkmal einem Teilnehmer zugeordnet sein. Dies kann einerseits bedeuten, daß ein Teilnehmer die genannten Dienste nutzen kann, indem er eine Nachricht sendet, die bei einem von ihm ausgewählten Zielteilnehmer als Nachricht eines anderen Dienstes ausgegeben wird, da er in seinem im Kommunikationsnetz gespeicherten Teilnehmerprofil hierzu eine individuelle Berechtigung hat.

Kommunikationsnetz in diesem Sinne kann sowohl ein öffentliches Telefonvermittlungsnetz sein, ein Mobilfunknetz oder ein Datennetz wie z.B. Internet. In diesem Fall wird eine Nachricht nur dann an eine Umsetzeinrichtung wie z.B. einen Server zugestellt, wenn eine Berechtigung zur Nutzung des Dienstes im Teilnehmerprofil gespeichert ist. Andererseits kann ein Teilnehmer die genannten Dienste nutzen, indem er eine Nachricht in umgesetztem Format, also mit dem vom Sendedienst abweichenden Dienst empfangen kann, sofern er hierzu in seinem Teilnehmerprofil eine individuelle Berechtigung hat. In diesem Fall wird von der Umsetzeinrichtung nur dann eine Nachricht zugestellt, wenn der Adressat eine Berechtigung zum Empfang hat.

Wenn eines der vorstehenden Leistungsmerkmale als teilnehmerindividuelles Leistungsmerkmal eingerichtet ist, kann die Prüfung der Berechtigung in jedem Fall entweder in der Ursprungsvermittlungseinrichtung des Teilnehmers, in einer Übergangsvermittlungsstelle, in einem Kurznachrichtendienstzentrum oder in einem Server erfolgen. Vorzugsweise erfolgt jedoch die Prüfung, ob ein Adressat zum Empfang einer zu einem Dienst gehörenden Nachricht berechtigt ist, in dem Zielvermittlungsknoten des Empfängerendgerätes bzw., falls das Endgerät ein Mobilfunkendgerät ist, im Mobilvermittlungszentrum. Die Überprüfung, ob ein Absender zum Nutzen eines der erfindungsgemäßen Dienste berechtigt ist, findet vorzugsweise im Ursprungsvermittlungsknoten des Absender-Endgerätes statt.

Wenn der genutzte Dienst das Zustellen einer als Kurznachricht eingegebenen Nachricht im Format eines anderen Dienstes ist, kann die Berechtigungsüberprüfung des Absenders auch im Kurznachrichtendienstzentrum oder in einem die Umsetzeinrichtung realisierenden Server erfolgen. Dies hat den Vorteil, daß nicht in allen Netzknoten eine entsprechende Berechtigungsüberprüfungsroutine eingerichtet werden müßte.

Aus diesem Grunde könnte es auch empfehlenswert sein, die Berechtigungsprüfung von Empfängern in der Umsetzeinrichtung oder, falls die gesendete Nachricht eine Kurznachricht ist, im Kurznachrichtendienstzentrum erfolgen.

Nachstehend wird die Erfindung anhand eines in den Zeichnungen dargestellten Ausführungsbeispiels beschrieben. Es zeigen:
- Fig. 1 bis 4: in schematischer Blockdarstellung die Komponenten eines Mobilfunknetzes mit erfindungsgemäßem Server und
- Fig. 5: in schematischer Blockdarstellung den Aufbau eines erfindungsgemäßen Servers.

Die Bezugszeichen in den Figuren haben folgende Bedeutung:
- SMS: Kurznachrichtendienst-Zentrum
- GMSC-IWMSC: SMS-MSC-Gateway
- MSC: Mobildienstvermittlungszentrum
- MS: Mobilstation
- HLR: Ortsregister der Heimatmobilstationen
- VLR: Ortsregister der Besuchermobilstationen
- SERVER: Server
- PSTN: Öffentliches Telefonvermittlungsnetz
- PDN: Datennetz
- FAX: Endgerät des öffentlichen Telefonvermittlungsnetzes, beispielsweise Telefon- oder Fax-Gerät
- TERM: Endgerät des Datennetzes, beispielsweise E-Mail-Terminal, Fernschreiber oder Telegramm-Endgerät
- MODEM: Teil des Servers
- SOFT: Teil des Servers
- 1: erstes Koppelmodul
- 2: zweites Koppelmodul
- 3: Steuermodul
- 4: Text/Fax-Umwandlermodul
- 5: Fax/Kurznachricht-Umwandlermodul
- 6: Text/Sprache-Umwandlermodul
- 7: Sprachsynthesemodul
- 8: Sprache/Kurznachricht-Umwandlermodul
- 10: E-Mail/Kurznachricht-Umwandlermodul
- 11: Kurznachricht/Telegramm- bzw. Telex/Umwandlermodul
- 12: Telegramm-Nachricht/Kurznachricht-Umwandlermodul bzw. Telex/Kurznachricht-Umwandlermodul

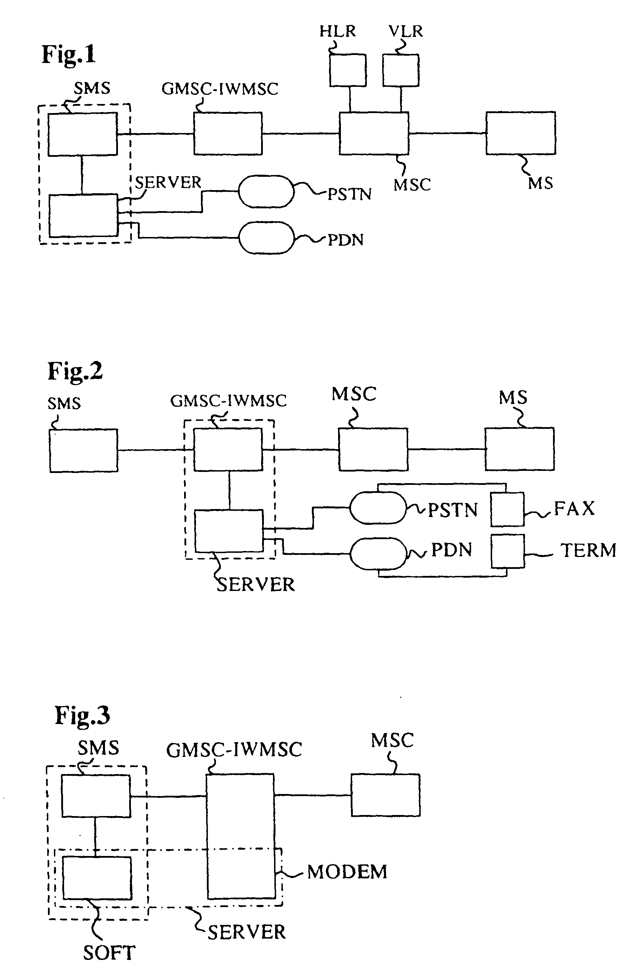

Die Figuren 1, 2 und 3 zeigen ein Mobilfunknetz, bestehend aus einem Kurznachrichtendienst-Zentrum SMS, einem SMS-MSC-Gateway GMSC-/IWMSC und einem Mobildienstvermittlungszentrum MSC. Zur besseren Verdeutlichung ist in den Figuren 1 und 2 auch eine Mobilstation MS dargestellt. Außerdem ist in Figur 1 ein dem Mobildienstvermittlungszentrum MSC zugeordnetes Ortsregister für Heimatmobilstationen HLR und ein Ortsregister für Besuchermobilstationen VLR dargestellt. Diese sowie weitere Komponenten eines Mobilfunknetzes sind in den Figuren 2, 3 und 4 zur Verbesserung der Übersichtlichkeit nicht dargestellt.

In den Figuren 1, 2, 3 und 4 ist außerdem jeweils als Umsetzeinrichtung zum Umsetzen einer alphanumerischen KurzNachricht in eine Nachricht eines anderen Dienstes ein Server dargestellt. In den Figuren 1 und 2 sind außerdem an den Server angeschlossene Kommunikationsnetze, nämlich ein öffentliches Telefonvermittlungsnetz PSTN und ein Datennetz PDN dargestellt. Wie in Figur 2 zu sehen ist, sind an das öffentliche Telefonvermittlungsnetz PSTN ein Endgerät FAX angeschlossen und an das Datennetz ein Endgerät TERM angeschlossen. Das öffenltiche Telefonvermittlungsnetz PSTN und das Datennetz PDN sind in den Figuren 1 und 2 jeweils als an den Server angeschlossen dargestellt.

Die Figuren 1, 2, 3 und 4 sollen sich prinzipiell nur in der Anordnung des Servers innerhalb des Netzverbundes unterscheiden. Daher gehören alle in irgendeiner der Figuren 1 bis 4 dargestellten Komponenten selbstverständlich auch zu den in den übrigen Figuren dargestellten Netzanordnungen, selbst wenn sie nicht in allen Figuren dargestellt sind.

In der Figur 1 ist der Server zum Umsetzen von Kurznachrichten in ein Format eines anderen Dienstes dem Kurznachrichtendienst-Zentrum SMS zugeordnet. Er kann, wie durch die unterbrochene Rahmenlinie dargestellt, mit dem Kurznachrichtendienst-Zentrum SMS eine physikalische Einheit bilden, er kann jedoch auch alternativ, wie durch eine volle Verbindungslinie dargestellt, als zusätzlicher Server an das Kurznachrichtendienst-Zentrum SMS angeschlossen sein.

In der in Figur 2 dargestellten Variante bildet der Server zum Umsetzen einer Kurznachricht in ein Nachrichtenformat eines anderen Dienstes eine Einheit mit dem SMS-MSC-Gateway GMSC-IWMSC.

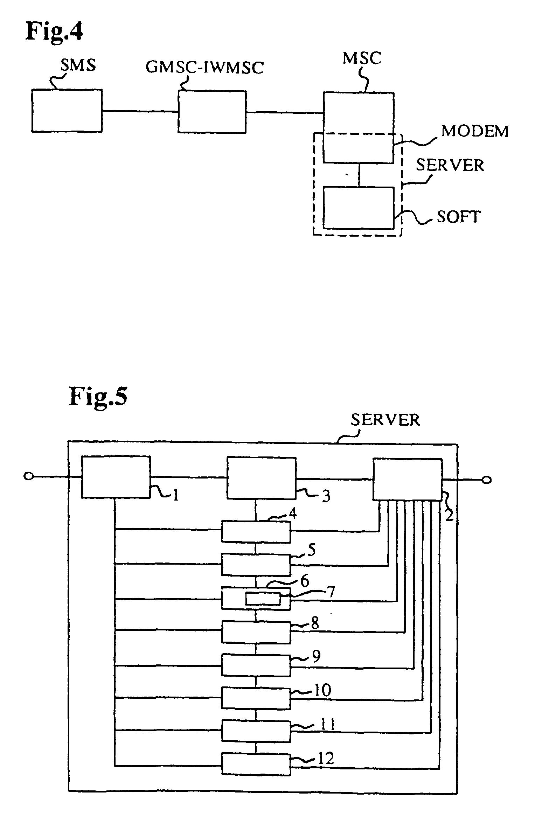

Die Figuren 3 und 4 zeigen jeweils eine Variante mit aufgeteiltem Server. In der in Figur 3 gezeigten Variante ist ein Teil des Servers, nämlich das Steuermodul und die funktionalen Einheiten der Umwandlermodule sowie das erste Koppelmodul an das Kurznachrichtendienst-Zentrum SMS angeschlossen bzw. Teil des Kurznachrichtendienst-Zentrum SMS. Diese Komponenten des Servers sind in der Figur mit SOFT bezeichnet. Der übrige Teil des Servers, insbesondere die physikalischen Einheiten wie Fax-Modem oder Sprachkonverter, bilden mit dem SMS-MSC-Gateway GMSC-IWMSC eine Einheit und werden in Figur 3 mit MODEM bezeichnet.

Auch Figur 4 zeigt einen aufgeteilten Server, ähnlich dem von Figur 3. Auch der Server gemäß Figur 4 ist aufgeteilt in einen Teil SOFT, in dem die funktionalen Steuerabläufe von Umsetzvorgängen ablaufen und in einen Teil MODEM, der vornehmlich die Hardwarekomponenten enthält. In dem Ausführungsbeispiel gemäß Figur 4 ist jedoch der gesamte Server einem Mobildienstvermittlungszentrum MSC zugeordnet, wobei der Hardwareteil MODEM mit dem Mobildienstevermittlungszentrum MSC eine physikalische Einheit bildet und die Steuereinheit mit den Softwaremodulen für die Umsetzvorgänge an das Mobildienstvermittlungszentrum MSC angeschlossen ist.

Figur 5 zeigt eine besonders günstige Ausgestaltungsform eines erfindungsgemäßen Servers in Blockdarstellung. Dieser Server enthält ein erstes Koppelmodul 1 zum Empfangen von Kurznachrichten vom Kurznachrichtensteuermodul, ein zweites Koppelmodul 2 zum Ausgeben der Nachricht an ein adressiertes Wiedergabegerät über ein Kommunikationsnetz, ein Steuermodul 3, um automatisch das Umwandeln von im Kurznachrichtprotokollformat empfangenen Kurznachrichten in ein Format eines anderen Dienstes zu steuern sowie einen Verbindungsaufbau zwischen dem Server und dem adressierten Wiedergabegerät zu veranlassen, ein Text/Fax-Umwandlermodul zum Umwandeln der im Kurznachrichtprotokollformat empfangenen Kurznachricht in ein Faksimile-Format, ein Fax/Kurznachricht-Umwandlermodul 5 zum Umwandeln von einer über die zweite Koppeleinrichtung empfangenen Faxnachricht in ein Kurznachrichtprotokollformat, ein Text/Sprach-Umwandlermodul 6 mit Sprachsynthesemodul 7 zum Umsetzen von Kurznachrichtsignalen in synthetisierte Sprachnachrichts-ignale und somit zum Umwandeln der im Kurznachrichtprotokollformat empfangenen Kurznachricht in ein zu einem Tonwiedergabegerät übertragbares und von diesem wiedergebbares Format, ein Sprachnachricht/Kurznachricht-Umwandlermodul 8 zum Umwandeln einer über das zweite Koppelmodul 2 empfangenen Sprachnachricht in ein Kurznachrichtprotokollformat, ein Kurznachricht/E-Mail-Umwandlermodul 9 zum Umwandeln einer im Kurznachrichtprotokollformat empfangenen Kurznachricht in ein zu einem Postfach eines elektronischen Postdienstes übertragbares und von diesem wiedergebbares Format, ein E-Mail-Kurznach-richt-Umwandlermodul 10 zum Umwandeln einer über das zweite Koppelmodul 2 im Format eines elektronischen Postdienstes empfangenen Nachricht in ein Kurznachrichtprotokollformat, ein Kurznachricht/Telegramm- und Kurznachricht/Telex-Umwandler-modul 11 zum Umwandeln einer in Kurznachrichtprotokollformat empfangenen Kurznachricht in ein Telegramm-Format oder ein Telex-Format und ein Telexnachricht/Kurznachricht- oder Telegrammnachricht/Kurznachricht-Umwandlermodul 12 zum Umwandeln von einer über das zweite Koppelmodul 2 empfangenen Telexnachricht oder einer entsprechenden Telegrammnachricht in ein Kurznachrichtprotokollformat.

Zum Zustellen einer vom Kurznachrichtendiest-Zentrum SMS als alphanumerische Kurznachricht abgesandten Nachricht an ein Fax-Wiedergabegerät FAX wird die alphanumerische Kurznachricht vom Kurznachrichtensteuermodul an den Server SERVER übermittelt. Sie gelangt an das erste Koppelmodul 1 und wird vom Steuermodul 3 zum Kurznachricht/Fax -Umwandlermodul 4 gleitet. Im Kurznachricht/Fax -Umwandlermodul 4 wird die Nachricht in eine Fax-Nachricht umgewandelt. Diese Nachricht wird über das zweite Koppelmodul 2 und das Öffentliche Telefonvermittlungsnetz PSTN an das Fax-Wiedergabegerät FAX übermittelt.

## Patentansprüche

1. Verfahren zum Zustellen einer von einem Teilnehmer als alphanumerische Kurznachricht eines Kurznachrichtendienstes abgesandten Nachricht an ein Wiedergabegerät eines weiteren Kommunikationsdienstes durch Übermitteln der alphanumerischen Kurznachricht von einem Kurznachrichtensteuermodul an eine Umsetzeinrichtung, Umsetzen der alphanumerischen Kurznachricht durch die Umsetzeinrichtung in eine Nachricht des weiteren Kommunikationsdienstes, und Übermitteln dieser Nachricht an das Wiedergabegerät,
**dadurch gekennzeichnet, daß**
zur Nutzung des Dienstes eine Überprüfung einer Berechtigung anhand eines individuellen Teilnehmerprofils durchgeführt wird, und bei einer Berechtigung die Nachricht übermittelt wird.

2. Verfahren nach Anspruch 1,
**dadurch gekennzeichnet, daß**
die Überprüfung der Berechtigung anhand des individuellen Teilnehmerprofils des Teilnehmers und/oder eines adressierten Zielteilnehmers durchgeführt wird.

3. Verfahren nach Anspruch 1 oder 2,
**dadurch gekennzeichnet, daß**
das individuelle Teilnehmerprofil des Teilnehmers und/oder des adressierten Zielteilnehmers in einer Komponente des Kommunikationsnetzes gespeichert wird.

4. Verfahren nach Anspruch 3,
**dadurch gekennzeichnet, daß**
als Komponente zur Speicherung des individuellen Teilnehmerprofils eine Komponente eines öffentlichen Telenfonvermittlungsnetzes (PSTN), eines Mobilfunknetzes oder eines Datennetzes (PDN) verwendet wird.

5. Verfahren nach einem vorhergehenden Anspruch,
**dadurch gekennzeichnet, daß**
die Überprüfung der Berechtigung des Teilnehmers in einer Ursprungsvermittlungseinrichtung (MSC) des Teilnehmers durchgeführt wird.

6. Verfahren nach einem der Ansprüche 1 bis 4,
**dadurch gekennzeichnet, daß**
die Überprüfung der Berechtigung in einer Übergangsvermittlungsstelle (GMSC-IWMSC) durchgeführt wird.

7. Verfahren nach einem der Ansprüche 1 bis 4,
**dadurch gekennzeichnet, daß**
die Überprüfung der Berechtigung des Teilnehmers und/oder des adressierten Zielteilnehmers in einem Kurznachrichtendienstzentrum (SMS) durchgeführt wird.

8. Verfahren nach einem der Ansprüche 1 bis 4,
**dadurch gekennzeichnet, daß**
die Überprüfung der Berechtigung des Teilnehmers und/oder des adressierten Zielteilnehmers in einem Server (SERVER) zum Umsetzen der alphanumerischen Kurznachricht in die Nachricht des weiteren Kommunikationsdienstes durchgeführt wird.

9. Verfahren nach einem der Ansprüche 1 bis 4,
**dadurch gekennzeichnet, daß**
die Überprüfung der Berechtigung des adressierten Zielteilnehmers in einem Zielvermittlungsknoten oder Mobilvermittlungszentrum (MSC) durchgeführt wird.

10. Verfahren nach einem der Ansprüche 1 bis 9,
**dadurch gekennzeichnet, daß**
die alphanumerische Kurznachricht durch die Umsetzeinrichtung in eine Fax-Nachricht umgesetzt wird, und die Fax-Nachricht an das als ein Fax-Wiedergabegerät (FAX) ausgestaltete adressierte Wiedergabegerät übermittelt wird.

11. Verfahren nach einem der Ansprüche 1 bis 9,
**dadurch gekennzeichnet, daß**
die alphanumerische Kurznachricht durch die Umsetzeinrichtung in eine Nachricht eines elektronischen Postdienstes umgesetzt wird, und die Nachricht an ein adressiertes Empfängerpostfach eines elektronischen Postdienstes übermittelt wird.

12. Verfahren nach einem der Ansprüche 1 bis 9,
**dadurch gekennzeichnet, daß**
die alphanumerische Kurznachricht durch die Umsetzeinrichtung in eine Sprachnachricht umgesetzt wird, und die Sprachnachricht an das als ein Tonwiedergabegerät (FAX) ausgestaltete adressierte Wiedergabegerät übermittelt wird.

13. Verfahren nach einem der Ansprüche 1 bis 9,
**dadurch gekennzeichnet, daß**
die alphanumerische Kurznachricht durch die Umsetzeinrichtung in eine Nachricht im Telexformat umgesetzt wird, und die Nachricht an das als ein Telexwiedergabegerät (TERM) ausgestaltete adressierte Wiedergabegerät übermittelt wird.

14. Verfahren nach einem der Ansprüche 1 bis 9,
**dadurch gekennzeichnet, daß**
die alphanumerische Kurznachricht durch die Umsetzeinrichtung in eine Nachricht im Telegrammnachrichtenformat umgesetzt wird, und die Nachricht an das als ein Telegrammwiedergabegerät (TERM) ausgestaltete adressierte Wiedergabegerät übermittelt wird.

15. Server (SERVER) zum Umsetzen einer in einem Kurznachrichtprotokoll-Format von einem Kurznachrichtensteuermodul eines Kurznachricht-Servicezentrums (SMS) empfangenen Kurznachricht eines Teilnehmers in eine Nachricht eines weiteren Kommunikationsdienstes, mit einem ersten Koppelmodul (1) zum Empfangen der Kurznachricht von einem Kurznachrichtensteuermodul eines Kurznachrichtendienst-Zentrum (SMS), einem zweiten Koppelmodul (2) zum Ausgeben der Nachricht an ein Wiedergabegerät (FAX, TERM, MS) des weiteren Kommunikationsdienstes über ein Kommunikationsnetz (PSTN, PDN), einem Umwandlermodul (4) zum Umwandeln der im Kurznachrichtprotokoll-Format empfangenen Kurznachricht in ein zu dem Wiedergabegerät (FAX, TERM, MS) übertragbares und von diesem wiedergebbares Format, und einem Steuermodul (3), um automatisch das Umwandeln von im Kurznachrichtprotokoll-Format empfangenen Kurznachrichten in das Format des weiteren Kommunikationsdienstes zu steuern sowie einen Verbindungsaufbau zwischen dem Server (SERVER) und dem Wiedergabegerät (FAX, TERM, MS) zu veranlassen,
**dadurch gekennzeichnet, daß**
der Server (SERVER) in dem Kurznachrichtendienst-Zentrum (SMS) verwirklicht oder mit diesem verbunden ist, und die Kurznachricht nach einer Überprüfung einer Berechtigung zur Nutzung des Dienstes anhand eines individuellen Teilnehmerprofils zu dem Server (SERVER) übermittelt wird.

16. Server (SERVER) nach Anspruch 15,
**gekennzeichnet durch**
ein in einer Komponente des Kommunikationsnetzes (PSTN, PDN) gespeichertes individuelles Teilnehmerprofil des Teilnehmers und/oder des adressierten Zielteilnehmers zur Überprüfung der Berechtigung.

17. Server (SERVER) nach Anspruch 15 oder 16,
**gekennzeichnet durch**
ein als ein Text/Fax-Umwandlermodul (4) ausgestaltetes Umwandlermodul zum Umwandeln der im Kurznachrichtenprotokoll-Format empfangenen Kurznachricht in ein zu einem als ein Telefaxgerät (FAX) ausgestalteten adressierten Wiedergabegerät übertragbares und von diesem wiedergebbares Faksimileformat.

18. Server (SERVER) nach Anspruch 17,
**gekennzeichnet durch**
ein zusätzliches FAX/Kurznachricht-Umwandlermodul (5) zum Umwandeln von einer über das zweite Koppelmodul (2) empfangenen Fax-Nachricht in ein Kurznachrichtprotokoll-Format, wobei das Steuermodul (3) außerdem vorgesehen ist, um automatisch das Umwandeln von im Faksimileformat empfangenen Nachrichten in ein Kurznachrichtprotokoll-Format zu steuern sowie das Kurznachrichtensteuermodul des Kurznachricht-Servicezentrums (SMS) zum Zustellen der Kurznachricht an ein adressiertes Endgerät (MS) zu veranlassen.

19. Server (SERVER) nach einem der Ansprüche 15 bis 18,
**gekennzeichnet durch**
ein zusätzliches Text/Sprache-Umwandlermodul (6) mit Sprachsynthesemodul (7) zum Umsetzen der Textnachrichtsignale in synthetisierte Sprachnachrichtsignale und somit zum Umwandeln der im Kurznachrichtprotokoll-Format empfangenen Kurznachricht in ein zu einem als ein Tonwiedergabegerät (FAX, MS) ausgestalteten adressierten Wiedergabegerät übertragbares und von diesem wiedergebbares Format.

20. Server (SERVER) nach Anspruch 19,
**gekennzeichnet durch**
ein zusätzliches Sprachnachricht/Kurznachricht-Umwandlermodul (8) zum Umwandeln von einer über das zweite Koppelmodul (2) empfangenen Sprachnachricht in ein Kurznachrichtprotokoll-Format, wobei das Steuermodul (3) außerdem vorgesehen ist, um automatisch das Umwandeln von in einem Sprachformat empfangenen Nachrichten in ein Kurznachrichtprotokoll-Format zu steuern sowie das Kurznachrichtensteuermodul des Kurznachricht-Servicezentrums (SMS) zum Zustellen der Kurznachricht an ein adressiertes Endgerät (MS) zu veranlassen.

21. Server (SERVER) nach einem der Ansprüche 15 bis 20,
**gekennzeichnet durch**
ein zusätzliches Kurznachricht/E-Mail-Umwandlermodul (9) zum Umwandeln der im Kurznachrichtprotokoll-Format empfangenen Kurznachricht in ein zu einem adressierten Postfach eines elektronischen Postdienstes übertragbares und von diesem wiedergebbares Format.

22. Server (SERVER) nach Anspruch 21,
**gekennzeichnet durch**
ein zusätzliches E-Mail-/Kurznachricht-Umwandlermodul (10) zum Umwandeln von einer über das zweite Koppelmodul (2) im Format eines elektronischen Postdienstes empfangenen Nachricht in ein Kurznachrichtprotokoll-Format, wobei das Steuermodul (3) außerdem vorgesehen ist, um automatisch das Umwandeln von in dem Format des elektronischen Postdienstes empfangenen Nachrichten in ein Kurznachrichtprotokoll-Format zu steuern sowie das Kurznachrichtensteuermodul des Kurznachricht-Servicezentrums (SMS) zum Zustellen der Kurznachricht an ein adressiertes Endgerät (MS) zu veranlassen.

23. Server (SERVER) nach einem der Ansprüche 15 bis 22,
**gekennzeichnet durch**
ein zusätzliches Kurznachricht/Telex-Umwandlermodul (11) zum Umwandeln der im Kurznachrichtprotokoll-Format empfangenen Kurznachricht in ein zu einem als ein Telexgerät (TERM) ausgestalteten adressierten Wiedergabegerät übertragbares und von diesem wiedergebbares Format.

24. Server (SERVER) nach einem der Ansprüche 15 bis 23,
**gekennzeichnet durch**
ein zusätzliches Kurznachricht/Telegramm-Umwandlermodul (11) zum Umwandeln der im Kurznachrichtprotokoll-Format empfangenen Kurznachricht in ein zu einem als ein Telegrammgerät (TERM) ausgestalteten adressierten Wiedergabegerät übertragbares und von diesem wiedergebbares Format.

25. Server (SERVER) nach einem der Ansprüche 15 bis 24,
**gekennzeichnet durch**
ein zum Ausgeben von umgewandelten Nachrichten an ein Mobilfunknetz vorgesehenes zweites Koppelmodul (2).

## Claims

1. Method for delivering a message sent by a short message service in the form of an alphanumeric short message to a reproducing device of an additional communication service by sending the alphanumeric short message from a short message control module to a conversion device, converting said alphanumeric short message by the conversion device into a message of the additional communication service and sending this message to the reproducing device,
**characterized in that**,
in order to use the service, a verification of an authorization is carried out based on an individual subscriber profile and the message is sent in the case of an authorization.

2. Method according to claim 1,
**characterized in that**
the verification of the authorization is carried out based on an individual subscriber profile of the subscriber and/or an addressed destination subscriber.

3. Method according to claim 1 or 2,
**characterized in that**
the individual subscriber profile of the subscriber and/or the addressed destination subscriber is stored in a component of the communication network.

4. Method according to claim 3,
**characterized in that**
a component of a public switched telephone network (PSTN), a mobile radio network or a data network (PDN) is used as a component for storing the individual subscriber profile.

5. Method according to a preceding claim,
**characterized in that**
the verification of the authorization of the subscriber is carried out in a source switching centre (MSC) of the subscriber.

6. Method according to one of the claims 1 to 4,
**characterized in that**
the verification of the authorization is carried out in an interworking exchange (GMSC-IWMSC).

7. Method according to one of the claims 1 to 4,
**characterized in that**
the verification of the authorization of the subscriber and/or the addressed destination subscriber is carried out in a short message service centre (SMS).

8. Method according to one of the claims 1 to 4,
**characterized in that**
the verification of the authorization of the subscriber and/or the addressed destination subscriber is carried out in a server (SERVER) for converting the alphanumeric short message into the message of the additional communication service.

9. Method according to one of the claims 1 to 4,
**characterized in that**
the verification of the authorization of the addressed destination subscriber is carried out in a destination switching node or a mobile switching centre (MSC).

10. Method according to one of the claims 1 to 9,
**characterized in that**
the alphanumeric short message is converted by the conversion device into a facsimile message and the facsimile message is sent to the addressed reproducing device embodied in the form of a facsimile reproducing device (FACSIMILE).

11. Method according to one of the claims 1 to 9,
**characterized in that**
the alphanumeric short message is converted by the conversion device into a message of an electronic mail service, and the message is sent to an addressed receiver mailbox of an electronic mail service.

12. Method according to one of the claims 1 to 9,
**characterized in that**
the alphanumeric short message is converted by the conversion device into a voice message, and the voice message is sent to the addressed reproducing device embodied in the form of a sound reproducing device (FACSIMILE).

13. Method according to one of the claims 1 to 9,
**characterized in that**
the alphanumeric short message is converted by the conversion device into a telex format and the message is sent to the addressed reproducing device embodied in the form of a telex reproducing device (TERM).

14. Method according to one of the claims 1 to 9,
**characterized in that**
the alphanumeric short message is converted by the conversion device into a message in the telegram message format and the message is sent to the addressed reproducing device embodied in the form of a telegram reproducing device (TERM).

15. Server (SERVER) for converting a short message of a subscriber received in a short message protocol format from a short message control module of a short message service centre (SMS) into a message of an additional communication service with a first coupling module (1) for receiving the short message from a short message control module of a short message service centre (SMS), a second coupling module (2) to output the message to a reproducing device (FACSIMILE, TERM, MS) of the additional communication service via a communication network (PSTN, PDN), a conversion module (4) for converting the short message received in the short message protocol format into a format which can be transferred to a reproducing device (FACSIMILE, TERM, MS) and can be reproduced by it, and a control module (3) to control the automatic conversion of short messages received in the short message protocol format into the format of the additional communication service and to establish a connection between the server (SERVER) and the reproducing device (FACSIMILE, TERM, MS),
**characterized in that**
the server (SERVER) is implemented in or connected to said short message service centre (SMS) and the short message is sent to the server (SERVER) after verification of an authorization for using the service based on an individual subscriber profile.

16. Server (SERVER) according to claim 15,
**characterized by**
an individual subscriber profile of the subscriber stored in a component of the communication network (PSTN, PDN) and/or the addressed destination subscriber for verifying the authorization.

17. Server (SERVER) according to claim 15 or 16,
**characterized by**
a conversion module embodied in the form of a text/facsimile conversion module (4) for converting the short message received in the short message protocol format into a facsimile format which can be transferred to an addressed reproducing device embodied as a telefax device (FACSIMILE) and can be reproduced by it.

18. Server (SERVER) according to claim 17,
**characterized by**
an additional FACSIMILE/short message conversion device (5) for converting a facsimile message received via the second coupling module (2) into a short message protocol format in which case the control module (3) also serves to control the automatic conversion of messages received in the facsimile format into a short message protocol format and to activate the short message control module of the short message service centre (SMS) to deliver the short message to an addressed terminal part (MS).

19. Server (SERVER) according to one of the claims 15 to 18,
**characterized by**
an additional text/voice conversion module (6) with a voice synthesis module (7) for converting the text message signals into synthesized voice message signals and in this way for converting the short message received in the short message protocol format into a format which can be transferred to a sound reproducing device (FACSIMILE, MS) and can be reproduced by it.

20. Server (SERVER) according to claim 19,
**characterized by**
an additional voice message/short message conversion module (8) for converting a voice message received via the second coupling module (2) into a short message protocol format in which case the control module (3) also serves to control the automatic conversion of messages received in a voice format into a short message protocol format and to activate the short message control module of the short message service centre (SMS) to deliver the short message to an addressed terminal part (MS).

21. Server (SERVER) according to one of the claims 15 to 20,
**characterized by**
an additional short message/e-mail conversion module (9) for converting a short message received in the short message protocol format into a format which can be transferred to an addressed mailbox of an electronic mail service and can be reproduced by it.

22. Server (SERVER) according to claim 21,
**characterized by**
an additional e-mail/short message conversion module (10) for converting a message received via the second coupling module (2) in a format of an electronic mail service into a short message protocol format in which case the control module (3) also serves to control the automatic conversion of messages received in a format of an electronic mail service into a short message protocol format and, in addition to that, to activate the short message control module of the short message service centre (SMS) to deliver the short message to an addressed terminal part (MS).

23. Server (SERVER) according to one of the claims 15 to 22,
**characterized by**
an additional short message/telex conversion module (11) for converting the short message received in the short message protocol format into a format which can be transferred to an addressed reproducing device embodied as a telex device (TERM) and can be reproduced by it.

24. Server (SERVER) according to one of the claims 15 to 23,
**characterized by**
an additional short message/telegram conversion module (11) for converting the short message received in the short message protocol format into a format which can be transferred to an addressed reproducing device embodied as a telegram device (TERM) and can be reproduced by it.

25. Server (SERVER) according to one of the claims 15 to 24,
**characterized by**
a second coupling module (2) which serves to output the converted messages to a mobile radio network.

## Revendications

1. Procédé pour délivrer un message envoyé par un abonné sous la forme de message court alphanumérique d'un service de messagerie à un appareil de reproduction d'un autre service de communication par transmission du message court alphanumérique d'un module de commande de messages courts à un dispositif convertisseur, conversion du message court alphanumérique par le dispositif convertisseur en un message de l'autre service de communication, et transmission de ce message à l'appareil de reproduction,
**caractérisé en ce que**,
pour l'utilisation du service, un contrôle d'une autorisation est effectué à l'aide d'un profil d'abonné individuel, et le message est transmis dans le cas d'une autorisation.

2. Procédé selon la revendication 1,
**caractérisé en ce que**
le contrôle de l'autorisation est effectué à l'aide du profil d'abonné individuel de l'abonné et/ou d'un abonné cible adressé.

3. Procédé selon la revendication 1 ou 2,
**caractérisé en ce que**
le profil d'abonné individuel de l'abonné et/ou de l'abonné cible adressé est mémorisé dans une composante du réseau de communication .

4. Procédé selon la revendication 3,
**caractérisé en ce que**
comme composant pour le stockage du profil d'abonné individuel, on utilise un composant d'un réseau public de commutation téléphonique (PSTN), d'un réseau de téléphonie mobile ou d'un réseau de données (PDN).

5. Procédé selon une revendication précédente,
**caractérisé en ce que**
le contrôle de l'autorisation de l'abonné est effectué dans un dispositif de commutation d'origine (MSC) de l'abonné.

6. Procédé selon l'une quelconque des revendications 1 à 4,
**caractérisé en ce que**
le contrôle de l'autorisation est effectué dans un centre de commutation de transition (GMSC-IWMSC).

7. Procédé selon l'une quelconque des revendications 1à 4,
**caractérisé en ce que**
le contrôle de l'autorisation de l'abonné et/ou de l'abonné cible adressé est effectué dans un centre de service de messagerie (SMS).

8. Procédé selon l'une quelconque des revendications 1 à 4,
**caractérisé en ce que**
le contrôle de l'autorisation de l'abonné et/ou de l'abonné cible adressé est effectué dans un serveur (SERVER) pour la conversion du message court alphanumérique dans le message de l'autre service de communication.

9. Procédé selon l'une quelconque des revendications 1 à 4,
**caractérisé en ce que**
le contrôle de l'autorisation de l'abonné cible adressé est effectué dans un noeud de commutation cible ou un centre de commutation de téléphonie mobile (MSC).

10. Procédé selon l'une quelconque des revendications 1 à 9,
**caractérisé en ce que**
le message court alphanumérique est converti par le dispositif convertisseur en un message de fax, et le message de fax est transmis à l'appareil de reproduction adressé et conçu comme un appareil de reproduction de fax (FAX).

11. Procédé selon l'une quelconque des revendications 1 à 9,
**caractérisé en ce que**
le message court alphanumérique est converti par le dispositif convertisseur en un message d'un service postal électronique, et le message court est transmis à une boîte postale destinataire adressée d'un service postal électronique.

12. Procédé selon l'une quelconque des revendications 1 à 9,
**caractérisé en ce que**
le message court alphanumérique est converti par le dispositif convertisseur en un message vocal et le message vocal est transmis à l'appareil de reproduction adressé et conçu comme un appareil de reproduction sonore (FAX).

13. Procédé selon l'une quelconque des revendications 1 à 9,
**caractérisé en ce que**
le message court alphanumérique est converti par le dispositif convertisseur en un message dans le format télex et le message est transmis à l'appareil de reproduction adressé et conçu comme un appareil de reproduction de télex (TERM).

14. Procédé selon l'une quelconque des revendications 1 à 9,
**caractérisé en ce que**
le message court alphanumérique est converti par le dispositif convertisseur en un message dans le format de message de télégramme, et le message est transmis à l'appareil de reproduction adressé et conçu comme un appareil de reproduction de télégramme (TERM).

15. Serveur (SERVER) pour la conversion d'un message court, reçu dans un format de protocole de message court d'un module de commande d'un centre de service de messagerie (SMS), d'un abonné en un message d'un autre service de communication, avec un premier module de couplage (1) pour la réception du message court d'un module de commande de message court d'un centre de service de message court (SMS), un second module de couplage (2) pour l'envoi du message à un appareil de reproduction (FAX, TERM, MS) de l'autre service de communication par un réseau de communication (PSTN, PDN), un module convertisseur (4) pour la conversion du message court reçu dans le format de protocole de message court en un format transmissible à l'appareil de reproduction (FAX, TERM, MS) et reproductible par celui-ci et un module de commande (3), pour commander automatiquement la conversion de messages courts reçus dans le format de protocole de message court dans le format de l'autre service de communication et demander un établissement de liaison entre le serveur (SERVER) et l'appareil de reproduction (FAX, TERM, MS),
**caractérisé en ce que**
le serveur (SERVER) est réalisé dans le centre de service de messagerie (SMS) ou est relié avec celui-ci, et le message court est transmis après un contrôle d'autorisation pour l'utilisation du service à l'aide d'un profil d'abonné individuel au serveur (SERVER).

16. Serveur (SERVER) selon la revendication 15,
**caractérisé par**
un profil d'abonné individuel, mémorisé dans un composant du réseau de communication (PSTN, PDN), de l'abonné et/ou de l'abonné cible adressé pour le contrôle de l'autorisation.

17. Serveur (SERVER) selon la revendication 15 ou 16,
**caractérisé par**
un module convertisseur conçu comme un module convertisseur texte/fax (4) pour la conversion du message court reçu dans le format de protocole de message court en un format de fax transmissible à un appareil de reproduction adressé et conçu comme un télécopieur (FAX) et reproductible par celui-ci.

18. Serveur (SERVER) selon la revendication 17,
**caractérisé par**
un module convertisseur fax/message court (5) supplémentaire pour la conversion d'un message de fax reçu au moyen du second modèle de couplage (2) en un format de protocole de message court, le module de commande (3) étant prévu également pour commander automatiquement la conversion de messages reçus dans le format de fax dans le format de protocole de message court et pour demander au module de commande de message court du centre de service de messagerie (SMS) la délivrance du message court à un terminal (MS) adressé.

19. Serveur (SERVER) selon l'une quelconque des revendications 15 à 18,
**caractérisé par**
un module convertisseur texte/parole (6) supplémentaire avec le module de synthèse vocale (7) pour la conversion des signaux de message de texte en signaux synthétisés de messages vocaux et donc pour la conversion du message court reçu dans le format de protocole de message court en un format transmissible à un appareil de reproduction adressé et conçu comme un appareil de reproduction sonore (FAX, MS) et reproductible par celui-ci.

20. Serveur (SERVER) selon la revendication 19,
**caractérisé par**
un module convertisseur message vocal/message court (8) supplémentaire pour la conversion d'un message vocal reçu par le second module de couplage (2) en un format de protocole de message court, le module de commande (3) étant prévu également pour commander automatiquement la conversion de messages reçus dans un format de parole en un format de protocole de message court et demander au module de commande de message court du centre de service de messagerie (SMS) l'envoi du message court à un terminal (MS) adressé.

21. Serveur (SERVER) selon l'une quelconque des revendications 15 à 20,
**caractérisé par**
un module convertisseur message court/e-mail (9) supplémentaire pour la conversion du message reçu dans le format de protocole de message court en un format transmissible à une boîte postale adressée d'un service postal électronique et reproductible par celui-ci.

22. Serveur (SERVER) selon la revendication 21,
**caractérisé par**
un module convertisseur e-mail/message court (10) supplémentaire pour la conversion d'un message reçu par le second module de couplage (2) dans le format d'un service postal électronique en un format de protocole de message court, le module de commande (3) étant prévu également pour commander automatiquement la conversion de messages reçus dans le format du service postal électronique en un format de protocole de message court et demander au module de commande de message court du centre de service de messagerie (SMS) la délivrance du message court à un terminal (MS) adressé.

23. Serveur (SERVER) selon l'une quelconque des revendications 15 à 22,
**caractérisé par**
un module convertisseur message court/télex (11) supplémentaire pour la conversion du message court reçu dans le format du protocole de message court en un format transmissible à un appareil de reproduction adressé et conçu comme un appareil télex (TERM) et reproductible par cet appareil.

24. Serveur (SERVER) selon l'une quelconque des revendications 15 à 23,
**caractérisé par**
un module convertisseur message court/télégramme (11) supplémentaire pour la conversion du message court reçu dans le format du protocole de message court en un format transmissible à un appareil de reproduction adressé et conçu comme un appareil télégraphique (TERM) et reproductible par celui-ci.

25. Serveur (SERVER) selon l'une quelconque des revendications 15 à 24,
**caractérisé par**
un second module de couplage (2) prévu pour l'envoi de messages convertis à un réseau de téléphonie mobile.
